# EUROPEAN PATENT SPECIFICATION

(11) **EP 1 607 641 B1**
(45) Date of publication and mention of the grant of the patent: **08.08.2007**
(21) Application number: 05076257.4
(22) Date of filing: 30.05.2005
(51) Int. Cl.: F16B 37/04

(54) **Fastening assembly**
Befestigungseinrichtung
Dispositif de fixation

(30) Priority: 18.06.2004 NL 1026459
(43) Date of publication of application: 21.12.2005
(73) Proprietor: J. van Walraven Holding B.V., 3641 RK Mijdrecht (NL)
(72) Inventor: Van Walraven, Jan, 3641 GP Mijdrecht (NL)
(74) Representative: Houben, Christiaan Hein Willem Frans

(56) References cited:
- NL-C1- 1 010 655
- US-A- 4 840 525

## Description

The invention relates to a fastening assembly for fastening an object to a profiled-section element with a longitudinal slot, in particular a profiled-section element of the type which has two lateral sides extending in the longitudinal direction, a base which connects the lateral sides and a top side, which top side is formed by a flange directed inwards from each lateral side, which flanges between them delimit a longitudinal slot, the fastening assembly comprising:
- a metal nut having a top side and an opposite underside, the length of which nut is greater than the width of the longitudinal slot of the profiled-section element, and the width of which nut is such that the nut, with its longitudinal axis in line with the longitudinal slot, can be introduced into the profiled-section element through the longitudinal slot and can then be rotated in order to extend substantially transversely with respect to the longitudinal slot and to engage, by way of its top side, behind the flanges of the profiled-section element, the nut also having a preferably threaded bore passing through it for receiving a male fastening element for fastening the object to the profiled-section element when the nut is in its transverse position,
- a locking element on the top side of the nut, which locking body has a body which is connected to the nut and has a central opening, which is substantially coaxial with the hole in the nut, which body furthermore has flange engagement means which are designed to engage in clamping fashion on the flanges of the profiled-section element when the nut has been introduced into the longitudinal slot and is in the transverse position, so that the nut is held in place on the flanges.

A fastening assembly of this type is known from NL 1010655.

It is an object of the invention to provide an alternative fastening assembly.

This object is achieved by a fastening assembly according to the preamble of claim 1, characterized in that the flange engagement means comprise two spring arms, which each extend diametrally from the body in the longitudinal direction of the nut and are curved downwards in form, in such a manner that the distal end of the spring arm, located diametrically furthest away from the body, is closer to the nut than that end of the spring arm which adjoins the body, at a distance less than the thickness of the flanges of the profiled-section element the fastening assembly is to be used with.

The distance in the axial direction from the distal end to the top side of the nut, in the load-free state, is less than the thickness of the flanges of the profiled-section element. When the fastening assembly is arranged on a profiled-section element and is rotated into the fitted position, i.e. the position in which the nut is in the transverse position, the spring arms engage, by way of the region in the vicinity of their distal end, on the top side of the flanges. In this position, the spring arms are pressed upwards by the flanges, resulting in the clamping force of the spring arms.

Advantageously, the flange engagement means are provided with actuating projections which in each case extend, preferably upwards, away from the nut from the distal end of the spring arms, in such a manner that when the actuating projections are actuated, the distal ends of the spring arms are moved away from the nut.

Actuating the actuating projections increases the distance between the top side of the nut and the distal ends of the spring arms, resulting in sufficient space being formed, within which the flanges of the profiled-section element can be received when the nut is rotated towards the transverse position. When the actuating projections are then released, the spring arms spring back in the direction of the nut, with the result that they engage on the top side of the flanges and pull the nut upwards onto the underside of the flanges.

In a preferred embodiment, the fastening assembly also comprises a metal washer with a central hole, which washer bears against that side of the body of the locking element which faces away from the nut, and in which fastening assembly lips which hold the washer in place are arranged on the actuating projections. This embodiment can easily be transported and handled during assembly without the washer being lost or moving out of position. In a further embodiment, the lips engage over the edge of the washer in order to hold it in place.

In one possible embodiment, the washer, on the side facing the nut, has an engagement surface for engaging on the top side of the profiled-section element, which engagement surface has a recess for receiving the spring arms. In a further embodiment, the engagement surface of the washer also has a recess for at least partially accommodating the body of the locking element. These measures ensure that the washer can engage on the flanges and during the fitting of a threaded rod and a locking nut on the fastening assembly, metal-on-metal contact is formed between the washer and the flanges.

The invention will be explained in more detail in the following description with reference to the drawing, in which:
Fig. 1 shows a perspective view, with exploded parts, of a preferred embodiment of a fastening assembly according to the invention,
Fig. 2 shows a cross-sectional view of the fastening assembly from Fig. 1 in an assembled state,
Fig. 3 shows a bottom view of a washer of the fastening assembly shown in Fig. 1, and
Fig. 4 shows a cross section through a profiled-section element.

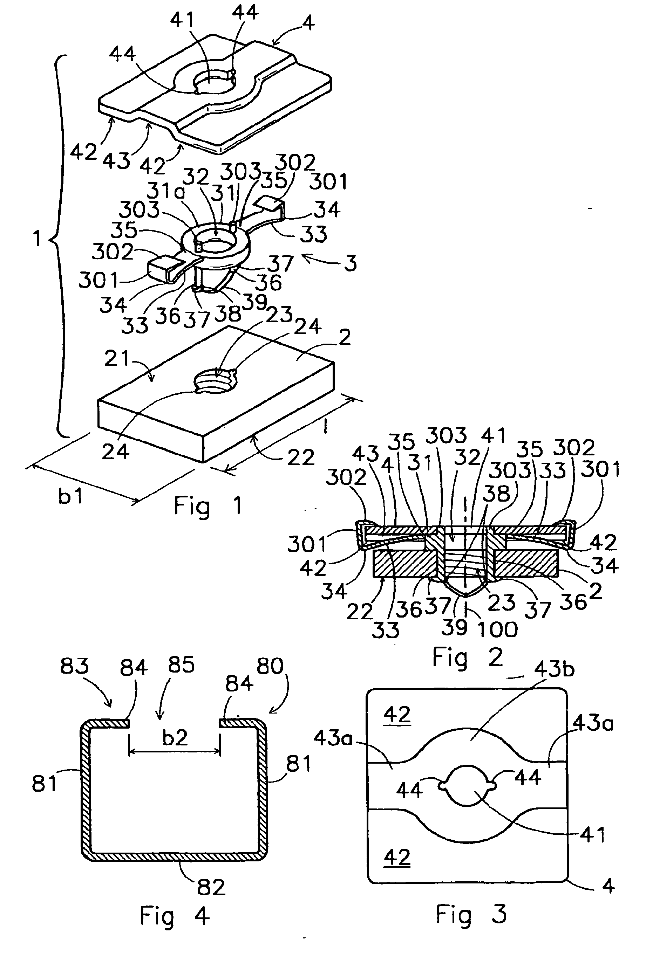

Fig. 1 shows a fastening assembly 1 which is intended to secure an object, such as for example a pipe clip, to a profiled-section element 80, a cross section of which is shown in Fig. 4. The profiled-section element 80 has two lateral sides 81 extending in the longitudinal direction, a base 82 which connects the lateral sides 81, and a top side 83. The top side 83 is formed by a flange 84 which is directed inwards from each lateral side. The flanges 84 between them delimit a longitudinal slot 85 of a width b2.

The fastening assembly 1 comprises an elongate metal nut 2, a locking element 3 and a washer 4. The nut 2 has a top side 21 and an opposite underside 22. The nut 2 is of a length 1 which is greater than the width b2 of the longitudinal slot 85 in the profiled-section element 80. Furthermore, the width b1 of the nut 2 is such that the nut 2, as is generally known, with its longitudinal axis in line with the longitudinal slot 85, can be introduced into the profiled-section element 83 through the longitudinal slot 85, and can then be rotated in order to extend substantially transversely with respect to the longitudinal slot 85, with its top side 21 engaging behind the flanges 84 of the profiled-section element 80. In a variant which is not shown but is known per se from the prior art, the width of the nut may be slightly greater than the width b2 of the longitudinal slot 85, in which case the nut, which has been positioned in line with the longitudinal slot 85, is then first of all pushed, in a tilted position, under one of the flanges 84 of the profiled-section element 80.

Furthermore, the nut 2 has a preferably threaded bore 23 passing through it for receiving a male fastening element, such as a bolt or a threaded rod for fastening the object to the profiled-section element 80 when the nut 2 is in its transverse position. In the preferred embodiment shown, the nut 2 is provided with two cutouts 24 which, adjacent to the bore, extend through the nut 2 from the top side 21 to the underside 22. The cutouts 24 are located diametrically opposite one another with respect to the bore 23.

The locking element 3 is preferably made from a single piece of plastic by injection moulding. The locking element 3 is arranged against the top side 21 of the nut 2 and is connected to the latter in a manner which is to be described in more detail. The locking element 3 has a body 31 with a central opening 32 which is substantially coaxial with the bore 23 in the nut 2, as can be seen clearly in Fig. 2. The body 31 is preferably substantially in the shape of a circular ring, as shown in the figures, although it may also take other forms. The annular body 31 has an external diameter which is smaller than the width b2 of the longitudinal slot 85 in the profiled-section element 80.

Furthermore, the locking element 3 has a flange engagement means, which comprise two spring arms 33, which each extend diametrally from the annular body 31, in the longitudinal direction of the nut 2. The arms 33 are curved in form, in such a manner that the distal end 34, located diametrically furthest away from the body 31, of the spring arm 33 is closer to the nut 2 than the end 35, adjoining the annular body 31, of the spring arm 33. The distance between the top side 21 of the nut 2 and the distal end 34 of the arm 33 is less than the thickness of the flanges 84 of the profiled-section element 80. The spring arms 33 are therefore designed to engage in clamping fashion, interacting with the nut 2, on the flanges 84 of the profiled-section element 80 when the nut 2 has been introduced into the longitudinal slot 85 and is in the transverse position.

The locking element 3 has two connecting limbs 36 associated with the cutouts 24 adjoining the bore 23 in the nut 2. The connecting limbs 36 are received in the diametral cutouts 24, and in the exemplary embodiment shown are each provided with an outwardly facing protuberance 37 which hooks behind the edge of the cutout 24 at the underside 22 of the nut 2, as shown in Fig. 2. An embodiment in which only one of the limbs 36 is provided with a protuberance 37 is also conceivable.

The connecting limbs 36 preferably have a thickened portion 38, which in the example shown is located in line with the bore 23 in the nut 2. The thickened portion 38 ensures that a male fastening element which is to be fixed in the bore 23 is locked so that it cannot be released through rotation, for example because the screw thread on the male fastening element cuts into the thickened portion. In one possible embodiment, it is also possible for only one limb 36 to be provided with a thickened portion. It is also possible for the thickened portion, contrary to what is shown in the figures, to be located on the limb 36 at the level of the bore 23 in the nut 2. It is preferable for the ends of the connecting limbs 36 to be connected to one another by a connecting element 39.

The flange engagement means are provided with actuating projections 301 which in each case extend upwards, away from the nut 2, from the distal end 34 of the spring arms 33. The actuating projections 301 of the preferred embodiment shown can be actuated by being pressed towards one another. As a result, the distal ends 34 of the spring arms 33 are moved upwards, i.e. away from the nut 2. The distance between the top side 21 of the nut 2 and the distal end 34 of the spring arms 33 is in this way increased, resulting in sufficient space being formed, between which the flanges 84 of the profiled-section element 80 can be received when the nut 2 is being rotated towards the transverse position. When the actuating projections 301 are then released, the spring arms 33 spring back in the direction of the nut 2, with the result that they engage on the top side of the flanges 84 and at the same time pull the nut 2 upwards, onto the underside of the flanges 84.

In one possible embodiment of the invention, the fastening assembly comprises only a nut 2 and a locking body 3. In the preferred embodiment shown, however, the fastening assembly 1 also comprises a metal washer 4 with a central hole 41. The washer 4 bears against that side 31a of the body 31 of the locking element 3 which faces away from the nut 2. In the side facing towards the nut 2, the washer 4 has an engagement surface 42 for engaging on the top side 83 of the profiled-section element 80. In the preferred embodiment, the engagement surface 42 has a recess 43 with a section 43a for receiving the spring arms 33 when the nut 2 has been moved into the transverse position in the profiled-section element 80, and a section 43b for at least partially receiving the annular body 31 of the locking element 3, as indicated in Fig. 3. In the embodiment shown, the washer 4 is formed in such a manner that at the location of the recess 43 on the top side there is an elevation, as can be seen most clearly from Fig. 1.

In the preferred embodiment shown, the washer 4 is connected to the locking body 3. For this purpose, lips 302 are arranged on the actuating projections 301 of the locking element 3, which lips 302 engage over the edge of the washer 4 and hold the washer 4 in place, as shown in Fig. 2. Furthermore, one or more cutouts 44, in which associated protuberances 303 arranged on the top side 31a of the annular body 31 of the locking element 3 are received, are arranged adjacent to the central hole 41 in the washer 4. The protuberances 303 are responsible for fixing the washer 4 on the locking element with respect to movements in a plane parallel to the washer 4. The lips 302 are responsible for fixing perpendicular to the plane of the washer 4.

In one possible embodiment, the protuberances 303 could be omitted. In that case, the movement of the washer 4 with respect to the locking element 3 in a plane parallel to the washer 4 is blocked or at least restricted by the annular body 31 arranged in the recess 43 and the spring arms 33 at least partially accommodated in the cutout 43. Furthermore, the actuating projections 301 also block a movement of the washer 4 in the longitudinal direction of the nut 2 and a rotation about the centre axis 100 of the fastening assembly (cf. Fig. 2).

In a possible variant embodiment, the fastening assembly may furthermore comprise a male fastening element which is coupled to the nut 2.

## Claims

1. Fastening assembly (1) for fastening an object to a profiled-section element (80) with a longitudinal slot (85), in particular a profiled-section element of the type which has two lateral sides (81) extending in the longitudinal direction, a base (82) which connects the lateral sides (81), and a top side (83), which top side (83) is formed by a flange (84) directed inwards from each lateral side (81), which flanges (84) between them delimit a longitudinal slot (85), the fastening assembly (7) comprising :
- a metal nut (2) having a top side (21) band an opposite underside (22), the length (l) of which nut (2) is greater than the width (b2) of the longitudinal slot (85) of the profiled-section element (80), and the width (b1) of which nut (2) is such that the nut (2), with its longitudinal axis in line with the longitudinal slot (85), can be introduced into the profiled-section element (80), through the longitudinal slot (85) and can then be rotated in order to extend substantially transversely with respect to the longitudinal slot (85) and to engage, by way of its top side (21), behind the flanges (84) of the profiled-section element (80), the nut (2) also having a preferably threaded bore (23) passing through it for receiving a male fastening element for fastening the object to the profiled-section element (80) when the nut (2) is in its transverse position,
- a locking element (3) on the top side (21) of the nut (2), which locking element (31) has a body (31) which is connected to the nut (2) and has a central opening (32), which is substantially coaxial with the bore (23) in the nut (2), which body (31) furthermore has flange engagement means which are designed to engage in clamping fashion on the flanges (84) of the profiled-section element (80) when the nut (2) has been introduced into the longitudinal slot (85) and is in the transverse position, so that the nut (2) is held in place on the flanges (84),
**characterized in that** the flange engagement means comprise two spring arms (33), which each extend diametrally from the body (31) in the longitudinal direction of the nut (2) and are curved in form, in such a manner that the distal end (34) of the spring arm (33), located diametrically furthest away from the body (31), is closer to the nut (2) than that end of the spring arm (33) which adjoins the body (31), at a distance less than the thickness of the flanges (84) of the profiled-section element (80), the fastening assembly is to be used with.

2. Fastening assembly according to claim 1, in which the flange engagement means are provided with actuating projections (301) which in each case extend away from the nut (2) from the distal end (34) of the spring arms (33), in such a manner that when the actuating projections (301), are actuated, the distal ends (34) of the spring arms (33) are moved away from the nut (2).

3. Fastening assembly according to claim 2, in which the actuating projections (301) extend upwards from the spring arms (33).

4. Fastening assembly according to one of the claims 2 or 3, which also comprises a metal washer (4) with a central hole (41), which washer (4) bears against that side (31a) of the body (31) of the locking element (3) which faces away from the nut (2), and in which fastening assembly (1) lips (302) which hold the washer (4) in place are arranged on the actuating projections (301).

5. Fastening assembly according to claim 4, in which the lips (302) on the actuating projections (301) engage over the edge of the washer (4).

6. Fastening assembly according to claim 4 or 5, in which the washer (4), on the side facing the nut (2), has an engagement surface (42) for engaging on the to side (83) of the profiled-section element (80), which engagement surface (42) a recess (43a) receiving the spring arms (33).

7. Fastening assembly according to claim 6, in which the engagement surface (42) of the washer (4) furthermore has a recess (43b) for at least partially accommodating the body (31) of the locking element (3).

8. Fastening assembly according to claims 4-7, in which one or more cutouts (44) are arranged adjacent to the central hole (41) in the washer (4), and in which one or more protuberances (303), which are received in the cutouts (44), are arranged on the body (31) of the locking element (3).

9. Fastening assembly according to one of the preceding claims, in which the nut (2) bears against the body (31) of the locking element (3).

10. Fastening assembly according to one of the preceding claims, in which the body (31) of the locking element (3) is in the form of a circular ring.

11. Fastening assembly according to one of the preceding claims, in which the nut (2) is provided with one or more cutouts (24), and in which the locking element (3) has one or more connecting limbs (36) which extend from the body (31) into the said cutouts (24).

12. Fastening assembly according to claim 11, in which the one or more cutouts (24) in the nut (2) adjoin the bore (23) in the nut (2).

13. Fastening assembly according to claim 11 or 12, in which cutouts (24) in the nut (2) extend from the top side (21) to the underside (22).

14. Fastening assembly according to one of claims 11-13, in which the nut (2) is provided with two cutouts (24), which are positioned diametrically opposite one another with respect to the bore (23), and the locking element (3) has two associated connecting limbs (34), which are received in the diametric cutouts (24).

15. Fastening assembly according to claim 13, in which at least one connecting limb (36) is provided with a protuberance (37) which engages behind the underside (22) of the nut (2).

16. Fastening assembly according to one of claims 11-15, in which at least one connecting limb (36) has a thickened portion (38) which is located in or in line with the bore (23), in such a manner that a male fastening element which is to be fixed in the bore (23) is lock is locked by the thickened portion (38) such that it cannot be released by turning.

17. Fastening assembly according to claim 13, in which the ends of the connecting limbs (36) are connected to one another by a connecting elements (39).

18. Fastening assembly according to one of the preceding claims, also comprising a male fastening element which is fixed in the bore (23) in the nut (2).

19. Fastening assembly according to one of the preceding claims, in which the locking element (3) is made from plastic.

20. Fastening assembly according to one of the preceding claims, in which the locking element (3) is made from a single piece.

## Patentansprüche

1. Befestigungsanordnung (1) zum Befestigen eines Objektes an einem Profilelement (80) mit einem Längsschlitz (85), insbesondere einem Profilelement des Typs, der zwei Längsseiten (81), die sich in der Längsrichtung erstrecken, eine Basis (82), die die Längsseiten (81) verbindet, und eine Oberseite (83) hat, wobei die Oberseite (83) durch einen Flansch (84) gebildet wird, der von jeder Längsseite (81) nach innen gerichtet ist, und die Flansche (84) zwischen einander einen Längsschlitz (85) begrenzen, wobei die Befestigungsanordnung (1) umfasst:
eine Metallmutter (2) mit einer Oberseite (21) und einer gegenüberliegenden Unterseite (22), wobei die Länge (I) der Mutter (2) größer ist als die Breite (b2) des Längsschlitzes (85) des Profilelementes (80) und die Breite (b1) der Mutter (2) so ist, dass die Mutter (2), wenn ihre Längsachse fluchtend mit dem Längsschlitz (85) ist, über den Längsschlitz (85) in das Profilelement (80) eingeführt werden kann und dann gedreht werden kann, so dass sie sich im Wesentlichen quer in Bezug auf den Längsschlitz (85) erstreckt und über ihre Oberseite (21) hinter die Flansche (84) des Profilelementes (80) eingreift, und die Mutter (2) des Weiteren eine vorzugsweise mit Gewinde versehene Bohrung (23) aufweist, die durch sie hindurch verläuft, um ein Einführ-Befestigungselement zum Befestigen des Objektes an dem Profilelement (80) aufzunehmen, wenn sich die Mutter (2) in ihrer Querposition befindet,
ein Arretierelement (3) an der Oberseite (21) der Mutter (2), wobei das Arretierelement (3) einen Körper (31) hat, der mit der Mutter (2) verbunden ist und eine mittige Öffnung (32) hat, die im Wesentlichen koaxial zu der Bohrung (23) in der Mutter (2) ist, und der Körper (31) des Weiteren Flanscheingriffseinrichtungen aufweist, die so gestaltet sind, dass sie klemmend an den Flanschen (84) des Profilelementes (80) eingreifen, wenn die Mutter (2) in den Längsschlitz (85) eingeführt worden ist und sich in der Querposition befindet, so dass die Mutter (2) an den Flanschen (84) festgehalten wird,
**dadurch gekennzeichnet, dass** die Flanscheingriffseinrichtungen zwei Federarme (33) umfassen, die sich von dem Körper (31) in der Längsrichtung der Mutter (2) diametral erstrecken und so gekrümmt geformt sind, dass das vordere Ende (34) des Federarms (33), das diametral am weitesten von dem Körper (31) entfernt angeordnet ist, in einer Entfernung, die geringer ist als die Dicke der Flansche (84) des Profilelementes (80), mit dem die Befestigungsanordnung zu verwenden ist, näher an der Mutter (2) liegt als das Ende des Federarms (33), das an den Körper (31) angrenzt.

2. Befestigungsanordnung nach Anspruch 1, wobei die Flanscheingriffseinrichtungen mit Betätigungsvorsprüngen (301) versehen sind, die sich in jedem Fall von dem vorderen Ende (34) der Federarme (33) von der Mutter (2) so weg erstrecken, dass, wenn die Betätigungsvorsprünge (301) betätigt werden, die vorderen Enden (34) der Federarme (33) von der Mutter (2) wegbewegt werden.

3. Befestigungsanordnung nach Anspruch 2, wobei sich die Betätigungsvorsprünge (301) von den Federarmen (33) nach oben erstrecken.

4. Befestigungsanordnung nach einem der Ansprüche 2 oder 3, die des Weiteren eine Metallscheibe (4) mit einem mittigen Loch (41) umfasst, wobei die Scheibe an der Seite (31a) des Körpers (31) des Arretierelementes (3) anliegt, die von der Mutter (2) weg gewandt ist, und Lippen (302) der Befestigungsanordnung (1), die die Scheibe (4) festhalten, an den Betätigungsvorsprüngen (301) angeordnet sind.

5. Befestigungsanordnung nach Anspruch 4, wobei die Lippen (302) an den Betätigungsvorsprüngen (301) über den Rand der Scheibe (4) eingreifen.

6. Befestigungsanordnung nach Anspruch 4 oder 5, wobei die Scheibe (4) an der Seite, die der Mutter (2) zugewandt ist, eine Eingriffsfläche (42) zum Eingriff an der Oberseite (83) des Profilelementes (80) aufweist und die Eingriffsfläche (42) eine Aussparung (43a) zum Aufnehmen der Federarme (33) aufweist.

7. Befestigungsanordnung nach Anspruch 6, wobei die Eingriffsfläche (42) der Scheibe (4) des Weiteren eine Aussparung (43b) aufweist, die den Körper (31) des Arretierelementes (3) wenigstens teilweise aufnimmt.

8. Befestigungsanordnung nach den Ansprüchen 4 - 7, wobei ein oder mehrere Ausschnitte (44) an das mittige Loch (41) in der Scheibe (4) angrenzend angeordnet sind und ein Vorsprung oder mehrere Vorsprünge (303), der/die in den Ausschnitten (44) aufgenommen ist/sind, an dem Körper (31) des Arretierelementes (3) angeordnet ist/sind.

9. Befestigungsanordnung nach einem der vorangehenden Ansprüche, wobei die Mutter (2) an dem Körper (31) des Arretierelementes (3) anliegt.

10. Befestigungsanordnung nach einem der vorangehenden Ansprüche, wobei der Körper (31) des Arretierelementes (3) die Form eines kreisförmigen Rings hat.

11. Befestigungsanordnung nach einem der vorangehenden Ansprüche, wobei die Mutter (2) mit einem oder mehreren Ausschnitt/en (24) versehen ist und das Arretierelement (3) einen oder mehrere Verbindungsschenkel (36) hat, der/die sich von dem Körper (31) in die Ausschnitte (24) hinein erstreckt/erstrecken.

12. Befestigungsanordnung nach Anspruch 11, wobei der eine oder die mehreren Ausschnitt/e (24) in der Mutter (2) an die Bohrung (23) in der Mutter (2) angrenzt/angrenzen.

13. Befestigungsanordnung nach Anspruch 11 oder 12, wobei sich die Ausschnitte (24) in der Mutter (2) von der Oberseite (21) zur Unterseite (22) erstrecken.

14. Befestigungsanordnung nach einem der Ansprüche 11 - 13, wobei die Mutter (2) mit zwei Ausschnitten (24) versehen ist, die in Bezug auf die Bohrung (23) einander diametral gegenüberliegend angeordnet sind, und das Arretierelement (3) zwei zugehörige Verbindungsschenkel (34) aufweist, die in den diametralen Ausschnitten (24) aufgenommen sind.

15. Befestigungsanordnung nach Anspruch 13, wobei wenigstens ein Verbindungsschenkel (36) mit einem Vorsprung (37) versehen ist, der hinter der Unterseite (22) der Mutter (2) eingreift.

16. Befestigungsanordnung nach einem der Ansprüche 11 - 15, wobei der wenigstens ein Verbindungsschenkel (36) einen verdickten Abschnitt (38) aufweist, der in der Bohrung (23) oder fluchtend mit ihr so angeordnet ist, dass ein Einführ-Befestigungselement, das in der Bohrung (23) zu fixieren ist, durch den verdickten Abschnitt (38) so arretiert wird, dass es durch Drehen nicht gelöst werden kann.

17. Befestigungsanordnung nach Anspruch 13, wobei die Enden der Verbindungsschenkel (36) durch ein verbindendes Element (39) miteinander verbunden sind.

18. Befestigungsanordnung nach einem der vorangehenden Ansprüche, das des Weiteren ein Einführ-Befestigungselement umfasst, das in der Bohrung (23) in der Mutter (2) fixiert ist.

19. Befestigungsanordnung nach einem der vorangehenden Ansprüche, wobei das Arretierelement (3) aus Kunststoff besteht.

20. Befestigungsanordnung nach einem der vorangehenden Ansprüche, wobei das Arretierelement (3) aus einem Teil besteht.

## Revendications

1. Ensemble de fixation (1) destiné à fixer un objet sur un élément profilé (80) doté d'une fente longitudinale (85), et plus particulièrement un élément profilé du type comportant deux côtés latéraux (81) s'étendant dans la direction longitudinale, une base (82) qui relie les côtés latéraux (81) et un côté supérieur (83), ledit côté supérieur (83) étant formé d'un bord (84) dirigé vers l'intérieur depuis chaque côté latéral (81), lesdits bords (84) délimitant entre eux une fente longitudinale (85), le ensemble de fixation (1) comprenant :
- un écrou métallique (2) ayant un côté supérieur (21) et un côté inférieur opposé (22), la longueur (1) dudit écrou (2) étant supérieure à la largeur (b2) de la fente longitudinale (85) de l'élément profilé (80), et la largeur (b1) dudit écrou (2) étant telle que l'écrou (2), dont l'axe longitudinal est aligné sur la fente longitudinale (85), peut être introduit dans l'élément profilé (80) à travers la fente longitudinale (85) et peut ensuite être tourné de manière à s'étendre essentiellement de manière transversale par rapport à la fente longitudinale (85) et à venir en prise, au moyen de son côté supérieur (21), derrière les bords (84) de l'élément profilé (80), l'écrou (2) comportant également un alésage de préférence fileté (23) passant à travers celui-ci pour recevoir un élément de fixation mâle pour fixer l'objet sur l'élément profilé (80) lorsque l'écrou (2) est dans sa position transversale,
- un élément de verrouillage (3) sur le côté supérieur (21) de l'écrou (2), ledit élément de verrouillage (3) comportant un corps (31), qui est relié à l'écrou (2) et dispose d'une ouverture centrale (32), qui est essentiellement coaxiale à l'alésage (23) dans l'écrou (2), ledit corps (31) ayant en outre un moyen d'engagement de bord conçu pour venir en prise par serrage sur les bords (84) de l'élément profilé (80) lorsque l'écrou (2) a été introduit dans la fente longitudinale (85) et est dans la position transversale, de sorte que l'écrou (2) est maintenu en place sur les bords (84),
**caractérisé en ce que** le moyen d'engagement de bord comprend deux branches de ressort (33), qui s'étendent chacune diamétralement depuis le corps (31) dans la direction longitudinale de l'écrou (2) et sont de forme incurvée, de telle manière que l'extrémité distale (34) de la branche de ressort (33), située le plus loin possible diamétralement du corps (31), est plus proche de l'écrou (2) que ladite extrémité de la branche de ressort (33) qui est contiguë au corps (31), à une distance inférieure à l'épaisseur des bords (84) de l'élément profilé (80) avec lequel le ensemble de fixation doit être utilisé.

2. Ensemble de fixation selon la revendication 1, dans lequel le moyen d'engagement de bord est doté de saillies d'actionnement (301), qui, dans chacun des cas, s'étendent loin de l'écrou (2), depuis l'extrémité distale (34) des branches de ressort (33), de telle manière que lorsque les saillies d'actionnement (301) sont actionnées, les extrémités distales (34) des branches de ressort (33) sont éloignées de l'écrou (2).

3. Ensemble de fixation selon la revendication 2, dans lequel les saillies d'actionnement (301) s'étendent vers le haut depuis les branches de ressort (33).

4. Ensemble de fixation selon l'une des revendications 2 ou 3, qui comprend également une rondelle métallique (4) muni d'un trou central (41), ladite rondelle (4) reposant contre ce côté (310) du corps (31) de l'élément de verrouillage (3) qui est présenté loin de l'écrou (2), et, dans ledit ensemble de fixation (1), des rebords (302) qui maintiennent la rondelle (4) en place sont disposés sur les saillies d'actionnement (301).

5. Ensemble de fixation selon la revendication 4, dans lequel les rebords (302) sur les saillies d'actionnement (301) viennent en prise sur le bord de la rondelle (4).

6. Ensemble de fixation selon la revendication 4 ou 5, dans lequel la rondelle (4), sur le côté faisant face à l'écrou (2), a une surface d'engagement (42) pour mettre en prise le côté supérieur (83) de l'élément profilé (80), ladite surface d'engagement (42) ayant un évidement (43a) pour recevoir les branches de ressort (33).

7. Ensemble de fixation selon la revendication 6, dans lequel la surface d'engagement (42) de la rondelle (4) comporte en outre un évidement (43b) pour loger le corps (31) de l'élément de verrouillage (3) au moins en partie.

8. Ensemble de fixation selon les revendications 4 à 7, dans lequel une ou plusieurs découpes (44) sont disposées adjacentes au trou central (41) dans la rondelle (4), et dans lequel une ou plusieurs protubérances (303), qui sont reçues dans les découpes (44), sont disposées sur le corps (31) de l'élément de verrouillage (3).

9. Ensemble de fixation selon l'une des revendications précédentes, dans lequel l'écrou (2) repose contre le corps (31) de l'élément de verrouillage (3).

10. Ensemble de fixation selon l'une des revendications précédentes, dans lequel le corps (31) de l'élément de verrouillage (3) prend la forme d'un anneau circulaire.

11. Ensemble de fixation selon l'une des revendications précédentes, dans lequel l'écrou (2) est doté d'une ou de plusieurs découpes (24), et dans lequel l'élément de verrouillage (3) comporte un ou plusieurs membres de connexion (36) qui s'étendent depuis le corps (31) jusque dans lesdites découpes (24).

12. Ensemble de fixation selon la revendication 11, dans lequel la découpe ou les découpes (24) dans l'écrou (2) est/sont contiguë(s) à l'alésage (23) dans l'écrou (2).

13. Ensemble de fixation selon la revendication 11 ou 12, dans lequel les découpes (24) dans l'écrou (2) s'étendent depuis le côté supérieur (21) vers le côté inférieur (22).

14. Ensemble de fixation selon l'une des revendications 11 à 13, dans lequel l'écrou (2) est doté de deux découpes (24) qui sont diamétralement opposées l'une à l'autre par rapport à l'alésage (23), et l'élément de verrouillage (3) a deux membres de connexion associés (34) qui sont placés dans les découpes diamétrales (24).

15. Ensemble de fixation selon la revendication 13, dans lequel au moins un membre de connexion (36) est doté d'une protubérance (37) qui vient en prise derrière le côté inférieur (22) de l'écrou (2).

16. Ensemble de fixation selon l'une des revendications 11 à 15, dans lequel au moins un membre de connexion (36) dispose d'une partie épaissie (38) située dans ou alignée sur l'alésage (23) de sorte qu'un élément de fixation mâle qui doit être fixé dans l'alésage (23) est verrouillé par la partie épaissie (38) de sorte qu'il ne peut pas être relâché en tournant.

17. Ensemble de fixation selon la revendication 13, dans lequel les extrémités des membres de connexion (36) sont reliées l'une à l'autre par un élément de connexion (34).

18. Ensemble de fixation selon l'une des revendications précédentes, comprenant également un élément de fixation mâle fixé dans l'alésage (23) dans l'écrou (2).

19. Ensemble de fixation selon l'une des revendications précédentes, dans lequel l'élément de verrouillage (3) est composé de plastique.

20. Ensemble de fixation selon l'une des revendications précédentes, dans lequel l'élément de verrouillage (3) est composé d'une seule pièce.
